(19) 

Europäisches Patentamt

European Patent Office

Office européen des brevets

(11) **EP 4 496 200 A1**

(12) **EUROPEAN PATENT APPLICATION**

(43) Date of publication:
**22.01.2025 Bulletin 2025/04**

(21) Application number: **23186470.3**

(22) Date of filing: **19.07.2023**

(51) International Patent Classification (IPC):
*H02M 1/00* (2006.01)   *H02M 1/15* (2006.01)
*H02M 1/42* (2007.01)   *H02M 3/335* (2006.01)
*H02M 7/483* (2007.01)   *H02M 7/487* (2007.01)
*H02M 7/217* (2006.01)   *H02M 7/5395* (2006.01)

(52) Cooperative Patent Classification (CPC):
**H02M 1/007; H02M 1/0054; H02M 1/0074;
H02M 1/0095; H02M 1/15; H02M 1/4216;
H02M 3/33571; H02M 7/4835; H02M 7/487;**
H02M 3/33592; H02M 7/217; H02M 7/5395

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **ABB E-mobility B.V.
2629 JG Delft (NL)**

(72) Inventors:
• **HUBER, Jonas
5000 Aarau (CH)**
• **KOLAR, Johann Walter
8044 Zurich (CH)**
• **DROFENIK, Uwe
8053 Zurich (CH)**
• **CANALES, Francisco
5405 Baden-Dättwil (CH)**

(74) Representative: **Zimmermann & Partner
Patentanwälte mbB
Postfach 330 920
80069 München (DE)**

(54) **CONVERTER FOR TRANSFERRING POWER AND CORRESPONDING METHOD**

(57) A converter (100) for transferring power from a medium voltage side (MV) to a low voltage side (LV) or vice-versa is provided. The converter comprises an AC/DC converter stage (CS) configured to be connected to a three-phase medium-voltage AC power source (va, vb, vc) at the medium voltage side, the AC/DC converter stage (CS) having three AC input terminals (A, B, C) for the respective AC phases of the medium-voltage AC power source (va, vb, vc), and having a positive voltage output (P) and a negative voltage output (N); a DC link (DCL) comprising at least one first DC/DC converter (OC1, OC2) and at least one second DC/DC converter (OC3, OC4), wherein input sides of the at least one first and second DC/DC converters (OC1, OC2, OC3, OC4) are connected in series between the positive output (P) and the negative output (N) of the AC/DC converter stage (CS), with a midpoint (M) between the at least one first DC/DC converter (OC1, OC2) and the at least one second DC/DC converter (OC3, OC4); three switchable branches (BR1, BR2, BR3), each of the switchable branches (BR1, BR2, BR3) comprising, in a series connection between a respective one of the three AC input terminals (A, B, C) and a common star point (S), an inductor (LA, LB, LC) and at least one full-bridge circuit (FA1...FAj; FB1...FBj; FC1...FCj), wherein the star point (S) is directly connected to the midpoint (M) of the DC link (DCL); and a controller (CTL) configured to control the first and second DC/DC converters (OC1, OC2, OC3, OC4) and the full-bridge circuits (FA1...FAj; FB1...FBj; FC1...FCj) such that, when the switchable branch (BR1, BR2, BR3) that, at the point in time of performing the control, has the highest phase voltage among the three AC phases is referred to as the high branch, the switchable branch (FA1...FAj; FB1...FBj; FC1...FCj) that, at the point in time of performing the control, has the lowest phase voltage among the three AC phases is referred to as the low branch and the remaining switchable branch (FA1...FAj; FB1...FBj; FC1...FCj) is referred to as the mid branch, the at least one full-bridge circuit (FB1...FBj) of the mid branch (BR2) and the at least one full-bridge circuit (FA1...FAj; FC1...FCj) of either the high branch (BR1) or the low branch (BR3) are operated to impress a desired mid-branch current (i_midm) and the at least one full-bridge circuit (FA1...FAj; FC1...FCj) in the other one of the high branch (BR1) and the low branch (BR3) is turned off.

Processed by Luminess, 75001 PARIS (FR)

EP 4 496 200 A1

EP 4 496 200 A1

Fig. 1

2

## Description

TECHNICAL FIELD

The present disclosure generally relates to a converter and a method for operating the converter, and in particular to a converter and a corresponding method for transferring power from a medium voltage side to a low voltage side or vice-versa.

BACKGROUND

Converters for transferring power between a medium (MV) and a low voltage (LV) side are generally known in the art. A common use case are power supply units (PSU). In the exemplary case of transferring power from the medium to the low voltage side, such a PSU serves, for example, in charging of electric vehicles, supply of datacenter loads etc. A general requirement for such PSUs is to provide a constant output voltage, a constant output power, and to draw approximately sinusoidal currents from the MV grid, which are furthermore in phase with the grid phase voltages, i.e., to achieve power-factor correction (PFC) functionality.

Whereas traditional PSUs employ a low-frequency transformer (LFT) to step-down the MV grid voltage such that LV PFC rectifiers can be employed, solid-state transformer (SST) concepts directly interface the MV grid with power electronic converter stages and provide the galvanic isolation with medium-frequency transformers (MFTs) as part of isolated dc-dc converters, possibly leading to more compact realizations. To handle the relatively high MV levels, typically series connections of converter cells are employed, e.g., a cascaded-H-bridge (CHB) structure, where each MV phase connects to a branch consisting of a series filter inductor and a multitude of cascaded converter cells. Each cell contains an ac-dc stage and an isolated dc-dc converter. Whereas such a system provides full functionality in the sense of supporting arbitrary power factors at the grid interface (in particular, bidirectional power flow), the complexity is relatively high, and each branch essentially processes single-phase power with a corresponding large fluctuation.

There is a need for a converter having a comparatively low complexity and providing a comparatively low power fluctuation.

SUMMARY

According to the present disclosure, a converter according to claim 1, a method according to claim 9, and a use according to claim 10 are provided.

According to an aspect, a converter for transferring power from a MV side to a LV side or vice-versa is described. The converter comprises an AC/DC converter stage, a DC link, three switchable branches, and a controller. The AC/DC converter stage is configured to be connected to a three-phase medium-voltage AC power source at the medium voltage side. The AC/DC converter stage includes three AC input terminals for the respective AC phases of the medium-voltage AC power source. The AC/DC converter stage further includes a positive voltage output and a negative voltage output. The DC link comprises at least one first DC/DC converter and at least one second DC/DC converter. Input sides of the at least one first and second DC/DC converters are connected in series between the positive output and the negative output of the AC/DC converter stage, with a midpoint (M) between the at least one first DC/DC converter and the at least one second DC/DC converter. Each of the switchable branches comprises, in a series connection between a respective one of the three AC input terminals and a common star point, an inductor and at least one full-bridge circuit. The star point (S) is directly connected to the midpoint (M) of the DC link. The controller is configured to control the first and second DC/DC converters and the full-bridge circuits such that, when the switchable branch that, at the point in time of performing the control, has the highest phase voltage among the three AC phases is referred to as the high branch, the switchable branch that, at the point in time of performing the control, has the lowest phase voltage among the three AC phases is referred to as the low branch and the remaining switchable branch is referred to as the mid branch, the at least one full-bridge circuit of the mid branch and the at least one full-bridge circuit of either the high branch or the low branch are operated to impress a desired mid-branch current and the at least one full-bridge circuit in the other one of the high branch and the low branch is turned off.

A low voltage, as used herein, may refer to a voltage above 200 Volt (V), such as a voltage between 200 V - 1 kV, or even 200 V - 1.5 kV. A medium voltage, as used herein, may refer to a voltage higher than the low voltage, such as a voltage of above 1 kV, or even of above 1.5 kV, such as a voltage between 1 kV - 52 kV or 1.5 kV - 52 kV, particularly between 1 kV - 30 kV or 1.5 kV - 30 kV. For example, a medium voltage may be a voltage received, and optionally rectified, from a medium voltage grid, such as a 10 kV grid, a 15 kV grid, a 20 kV grid, a 25 kV grid, a 30 kV grid, or even a 50 kV grid. The medium voltage grid may be e.g. a 50 Hz grid or a 60 Hz grid.

The low voltage DC power may be particularly useful for low voltage DC applications, such as, but not limited to, powering devices, electric vehicle charging, electrolytic processes such as hydrogen generation, and/or any of the uses described in the background section of this disclosure. The converter may be configured for providing a low voltage DC power having at least 500 Kilowatt (kW), at least 1 MW, at least 2 MW, at least 3 MW, at least 5 MW, or even at least 10 MW.

As the medium voltage is present at the positive voltage output and the negative voltage output of the AC/DC converter stage, the positive voltage output of the AC/DC converter stage may be referred to herein as a positive medium voltage output, and the negative voltage output of the AC/DC converter stage may be referred to as the negative medium voltage output. The positive and negative voltage outputs may include a respective positive terminal and negative terminal, the positive and negative terminals being respectively connected to the input side of the first or second DC/DC converters.

In some embodiments, at least one of the full-bridge circuits comprises two or more full bridge circuits connected in series. For example, one or more of the full-bridge circuits comprise two full-bridge circuits connected in series. Advantageously, all of the switchable branches comprise a same number of full-bridge circuits.

In some embodiments, the at least one first DC/DC converter comprises a plurality of first DC/DC converter circuits connected with their input sides in series between the positive medium voltage output and the DC link midpoint, and the at least one second DC/DC converter comprises a plurality of second DC/DC converter circuits connected with their cell input sides in series between the negative medium voltage output (N) and the DC link midpoint.

On the output side of the DC/DC converters, the low voltage DC power is output. For example, the output side of the DC/DC converters includes a positive low voltage output terminal and a negative low voltage output terminal.

In some embodiments, each of the first and second DC/DC converter circuits comprises, respectively, the input side having a DC/AC converter circuit and an output side having an AC/DC converter circuit, wherein the input side and output side are galvanically isolated from each other, optionally galvanically isolated by an AC/AC transformer for transferring power from the cell input side to the cell output side or vice-versa. The AC/AC transformer may be a Medium Frequency Transformer, MFT.

As used herein, a MFT may refer to a transformer configured for transforming a medium frequency AC power. The medium frequency AC power may have a medium frequency. A medium frequency, according to embodiments described herein, may be understood as a frequency at or above 400 Hertz (Hz), at or above 600 Hz, at or above 800 Hz, at or above 1 kHz, at or above 2 kHz, at or above 5 kHz, at or above 10 kHz, at or above 20 kHz, at or above 50 kHz, or even at or above 100 kHz. The medium frequency transformer 120 may be a medium frequency transformer as described in document WO2021115966A1, which is incorporated herein in its entirety, and/or particularly to the extent of the description of a medium frequency transformer in the document. The medium frequency transformer may be configured for transforming the medium-frequency medium voltage AC power into a medium-frequency low voltage AC power.

In some embodiments, the first and second DC/DC converter circuits have, at their output side, a diode-based passive AC/DC converter circuit. Passive, as used herein, may refer to a circuit in which no switches such as transistors are controlled. For example, the first and second DC/DC converters are input-side controlled, having an actively switched DC/AC converter circuit on their input side. In general, also employable is any DC/DC converter stage in which the input current is controlled. For example, also employable is a stage in which the input voltage is regulated and a series inductance is included in the string of the DC/DC converter stage.

In some embodiments, output sides of the at least one first and the at least one second DC/DC converter circuits are connected in parallel to form the low voltage side. For example, when the output sides are connected in parallel and the input sides are connected in series, an input-series output-parallel (ISOP) configuration may be established.

In some embodiments, the AC/DC converter stage comprises a diode bridge. For example, the diode bridge includes a B6 diode bridge. When a diode bridge is used, the power typically flows from the MV side to the LV side, i.e. power is transferred from the MV to the LV side.

Alternatively, in some embodiments, the AC/DC converter stage may comprise a bi-directional power flow configuration. For example, IGBTs may be used instead of the diode bridge, such as IGBTs in an IGBT unfolder configuration, or GTOs may be used instead of the diode bridge. In a bi-directional power flow configuration, power may be transferred from the MV to the LV side, from the LV side to the MV side, or selectively between the MV and the LV side. It is noted that, although the description herein occasionally refers to an input side or an output side, e.g. the input and output sides of the DC/DC converters, this is not to be understood in a limiting manner and only exemplarily relates to the case when power is transferred from the MV to the LV side; that is, when power is transferred from the LV to the MV side, the input and output sides may still be referred to as such, even though their respective roles of inputting/outputting power are swapped.

In some embodiments, the at least one first DC/DC converter circuit and the at least one second DC/DC converter circuit operate at a medium frequency. A medium frequency, as used herein, may refer to frequency at or above 400 Hertz (Hz), at or above 600 Hz, at or above 800 Hz, at or above 1 kHz, at or above 2 kHz, at or above 5 kHz, at or above 10 kHz, at or above 20 kHz, at or above 50 kHz, or even at or above 100 kHz.

According to an aspect, a method of transferring power from a MV side to a LV side, or vice-versa, using a converter, is described. The converter is essentially configured as described herein. For example, the converter includes an AC/DC converter stage, a DC link, and three switchable branches. The AC/DC converter stage is configured to be connected to a three-phase medium-voltage AC power source at the medium voltage side. The AC/DC converter stage includes three AC input terminals for the respective AC phases of the medium-voltage AC power source. The AC/DC converter stage further includes a positive voltage output and a negative voltage output. The DC link comprises at least one first DC/DC converter and at least one second DC/DC converter. Input sides of the at least one first and second DC/DC converters are connected in series between the positive output and the negative output of the AC/DC converter stage, with a midpoint (M) between the at least one first DC/DC converter and the at least one second DC/DC converter. Each of the switchable branches comprises, in a series connection between a respective one of the three AC input terminals and a common star point, an inductor and at least one full-bridge circuit. The star point (S) is directly connected to the midpoint (M) of the DC link. The method includes providing a three-phase medium AC voltage to the respective input terminals of the converter, converting the medium AC voltage to a DC voltage by the AC/DC converter stage of the converter and providing the DC voltage between the positive voltage output and the negative voltage output, and controlling the first and second DC/DC converters and the bidirectional switch circuits such that, when the switchable branch that, at the point in time of performing the control, has the highest phase voltage among the three AC phases is referred to as the high branch, the switchable branch that, at the point in time of performing the control, has the lowest phase voltage among the three AC phases is referred to as the low branch and the remaining switchable branch is referred to as the mid branch, the at least one full-bridge circuit of the mid branch and the at least one full-bridge circuit of either the high branch (BR1) or the low branch are operated to impress a desired midbranch current and the at least one full-bridge circuit in the other one of the high branch and the low branch is turned off.

BRIEF DESCRIPTION OF THE DRAWINGS

Fig. 1(a) is a circuit diagram illustrating an exemplary configuration of a converter according to embodiments;

Fig. 1(b) is a circuit diagram illustrating an exemplary configuration of a full-bridge circuit employed in the converter of Fig. 1(a);

Fig. 1(c) is a circuit diagram illustrating an exemplary configuration of a DC/DC converter employed in the converter of Fig. 1(a);

Fig. 2 is a control diagram illustrating an exemplary signal flow in a control operation of the converter of Fig. 1(a);

Fig. 3 is a circuit diagram illustrating an equivalent circuit of the configuration of the converter of Fig. 1(a);

Figs. 4(a) through 4(g) are graphs illustrating simulated waveforms of various voltages, currents, and powers in the equivalent circuit of Fig. 3 in operation;

Fig. 5(a) is a circuit diagram illustrating another exemplary configuration of a converter;

Fig. 5(b) is a circuit diagram illustrating an exemplary configuration of a full-bridge circuit employed in the converter of Fig. 5(a);

Fig. 5(c) is a circuit diagram illustrating an exemplary configuration of a DC/DC converter employed in the converter of Fig. 5(a);

DETAILED DESCRIPTION

Technology is described hereinafter with reference to the figures, in which aspects exemplary embodiments are shown. The claimed invention may, however, be embodied in different forms and should not be construed as being limited to the embodiments set forth herein. Like reference numerals refer to like elements throughout. Like elements will, thus, not be described in detail with respect to the description of each figure. It should also be noted that the figures are only intended to facilitate the description of the embodiments. They are not intended as an exhaustive description of the claimed invention or as a limitation on the scope of the claimed invention. In addition, an illustrated embodiment needs not have all the aspects or advantages shown. An aspect or an advantage described in conjunction with a particular embodiment aspect is not necessarily limited to that embodiment aspect and can be practiced in any other embodiments aspects even if not so illustrated, or if not so explicitly described. The features, functions, and advantages may be achieved independently in various embodiments manners or may be combined in yet other embodiments.

Before describing exemplary embodiments aspects illustratively depicted in the several figures, a general introduction is provided to further understanding. Converters used e.g. in power supply units, PSUs, are generally known. For example, a topology may use a three-phase six-pulse diode rectifier bridge, also referred to as a B6 bridge or B6 stage, at the medium voltage input. The configuration of converter branches on the DC side of such a B6 bridge may vary according to the specific needs. In any such configuration, it is usually desirable that the B6 bridge is robust and shows low losses.

For example, in a conventional configuration not shown in the drawings, the three-phase unfolding function of the B6 bridge is combined with two isolated DC/DC converters, wherein the first of these is connected between a positive DC output, such as a positive DC rail, and a DC midpoint, and the second of these is connected between a negative DC output, such as a negative DC rail, and the DC midpoint. The DC midpoint is connected to the three phase AC input terminals via three four-quadrant phase-selector switches, PSS. The DC/DC converters may be operated as controlled current sources to impose a desired current, and the PSSs are configured such that these currents are mapped to the three phase input currents to be sinusoidal. As a downside, the resulting DC voltages on the input side of the DC/DC converters vary widely between 0V and

$$\sqrt{3/2}V_g$$

, where Vg is the line-to-line grid rms voltage. As a consequence, also the power processed by the dc-dc converters varies widely between zero and the total nominal output power.

In another conventional example not depicted, a dedicated bridge-leg is used to inject a current into the phase that is not connected to either the positive DC output or the negative DC output via the B6 stage, i.e. the phase whose voltage is vmid, where the three AC phase voltages va, vb, vc are mapped to vmax, vmid, vmin such that vmax>vmid>vmin, i.e. the mapping changes in each sector of a mains period, wherein each such sector covers 60° of phase. As the voltage between the positive and negative output terminals is vpn=vmax-vmin, a constant power flow requires a DC/DC converter connected between the positive and negative output terminals to control ipn=P/vpn. The bridge-leg is then used to inject a current into the middle phase that is proportional to vmid. When such a conventional configuration is extended from the above-described case, in which a comparatively low voltage is present on the AC side, to a medium-voltage on the AC side by stacking multiple DC/DC converter cells, the voltages between the positive and negative DC outputs becomes high, resulting in a need of the bridge-leg configuration to bear this high DC voltage, which makes the configuration complicated and/or expensive.

With the above general understanding borne in mind, embodiments for converters are described below.

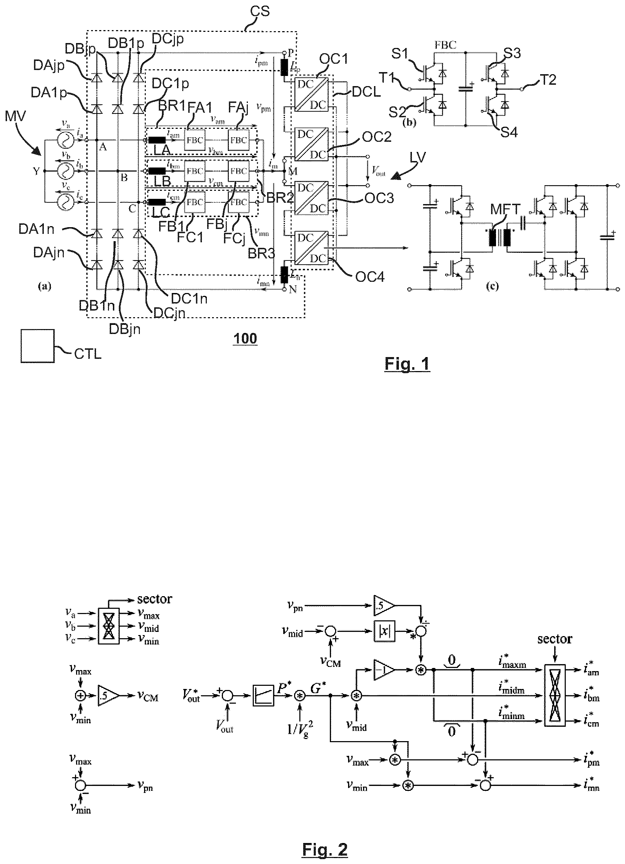

Fig. 1(a) shows a circuit diagram illustrating an exemplary embodiment of a converter 100. The MV AC side is shown as three voltage sources va, vb, vc for simplicity. The voltage sources va, vb, vc are Y-connected on their respective one end and provide a three-phase voltage at connection points A, B, C, wherein, at each connection point A, B, C, the phase difference with respect to the two other connection points is +120° or -120°, respectively. A B6 bridge connects the connection points A B, C to a positive voltage output P and a negative voltage output N.

From connection point A to the positive voltage output P, one or more diodes DA1p...DAjp that are connected in series may be employed, depending on the amplitude of the voltage. Likewise, from connection point A to the negative voltage output N, one or more diodes DA1n...DAjn that are connected in series may be employed. The same is true for the connection of the other connection points B, C to the respective positive or negative voltage outputs P, N. The diodes may be commonly referred to as diodes D in the following. The AC input terminals A, B, C connectible or connected to the three-phase medium-voltage AC power sources va, vb, vc, the diodes D, and the positive voltage output P and the negative voltage output N form an AC/DC converter stage CS.

A switchable branch BR1 is formed between the connection point A and a star point S. Switchable branch BR1 includes a series connection of an inductor LA and one or more full-bridge circuits FA1...FAj. A switchable branch BR2 is formed between the connection point B and the star point S. Switchable branch BR2 includes a series connection of an inductor LB and one or more full-bridge circuits FB1...FBj. A switchable branch BR3 is formed between the connection point A and the star point S. Switchable branch BR3 includes a series connection of an inductor LA and one or more full-bridge circuits FC1... FCj.

A DC link DCL includes first DC/DC converters OC1, OC2 and second DC/DC converters OC3, OC4. Input sides of first and second DC/DC converters OC1 through OC4 are connected in series between the positive output P and the negative output N of the AC/DC converter stage CS. A midpoint M is present between the first DC/DC converters OC1, OC2 and the second DC/DC converters OC3, OC4. The star point S is directly connected to the midpoint M. It is noted that the number of first DC/DC converters OC1, OC2 is not limited to two converters, and may be one first DC/DC converter or more than two first DC/DC converters, as appropriate. Likewise, the number of second DC/DC converters OC3, OC4 is not limited to two converters, and may be one second DC/DC converter or more than two second DC/DC converters, as appropriate.

When the converter is connected to the power sources va, vb, vc, the voltages applied to the connection points A, B, C are phase shifted by 120° to each other. Thus, there is always one phase that has the highest voltage among the three phases, one phase that has the lowest voltage among the three phases, and one phase that has a voltage in between the highest and the lowest voltage. The switchable branch BR1, BR2, BR3 that, at a certain point in time, is connected to the connection point A, B, C having the highest voltage (vmax) at that point in time is said to be the branch having the highest phase voltage, and referred to as the high branch. Likewise, the switchable branch BR1, BR2, BR3 that, at a certain point in time, is connected to the connection point A, B, C having the lowest voltage (vmin) at that point in time is said to be the branch having the lowest phase voltage, and referred to as the low branch. Switchable branch BR1, BR2, BR3 that, at a certain point in time, is connected to the connection point A, B, C having the voltage in between the highest and the lowest voltage at that point in time is said to be the branch having a medium, middle, or mid voltage (vmid), and referred to as the mid branch. In the claims, for facilitating the understanding and not by way of limitation, the switchable branch BR2 is assumed to be the mid branch; however, depending on the point in time that is considered, it is not necessarily the switchable branch BR2 that is the mid branch, but it may be the switchable branch BR1 or the switchable branch BR3 that are the mid branches. Similar statements apply to the high branch and the low branch.

A full-bridge circuit, or full-bridge cell, may be configured as shown in Fig. 1(b). Switches S1 through S4, such as IGBT transistors, in each full-bridge circuit are connected between a first terminal T1 and a second terminal T2. A free-wheeling diode is respectively connected antiparallel to each switch S1... S4.

An exemplary configuration of a DC/DC converter, or DC/DC converter cell, OC1...OC4 is illustrated in Fig. 1(c), wherein a Medium Frequency Transformer MFT serves as a galvanic isolation.

Referring again to Fig. 1(a), a controller CTL controls the first and second DC/DC converters OC1 through OC4 and the full-bridge circuits FA1...FAj; FB1...FBj; FC1...FCj. For the sake of simplicity, any control lines from the controller CTL to the parts that it controls are not shown in the drawings. A corresponding control structure is shown in Fig. 2. Again for simplicity, Fig. 2 does not show any current controllers for the output branches or the switchable branches.

The controller CTL controls the first and second DC/DC converters OC1 through OC4 and the full-bridge circuits FA1... FAj; FB1...FBj; FC1...FCj such that, at the point in time that the control is performed, the at least one full-bridge circuit FB1 ... FBj of the mid branch BR2 and the at least one full-bridge circuit FA1...FAj; FC1...FCj of either the high branch BR1 or the low branch BR3 are operated to impress a desired mid-branch current i_midm and the at least one full-bridge circuit FA1...FAj; FC1...FCj in the other one of the high branch (BR1) and the low branch BR3 is turned off.

That is, one of the high branch and the low branch is clamped in the sense of not switching. In essence, the phase terminals of the phases with vmax and vmin are clamped to P and N via the diodes. Then, the switchable branch, e.g. BR2 at an exemplary moment in time, of the middle phase switches to impress a desired phase current imid into that phase. The corresponding current in the middle branch, imidm = imid is then redistributed as follows: Part of it flows into the midpoint M, and the other part flows through the switchable branch of either the phase with vmax or the phase with vmin to either P or N. The effect is a redistribution of the phase current of the phase with vmid into the midpoint M and either P or N.

In other words, a redistribution of the current imid in the middle branch, e.g. BR2 at the moment in time, can be redistributed into the positive or negative output P, N by utilizing the full-bridge circuits connected to the two other phases that are clamped (by the diodes) to the respective positive or negative output P, N. That is, imid contributes to ipm (when imid>0) or to imn (when imid<0).

This operating mode requires then only the full-bridge circuits in two out of the three switchable branches to operate with high-frequency switching at any given time, reducing switching losses.

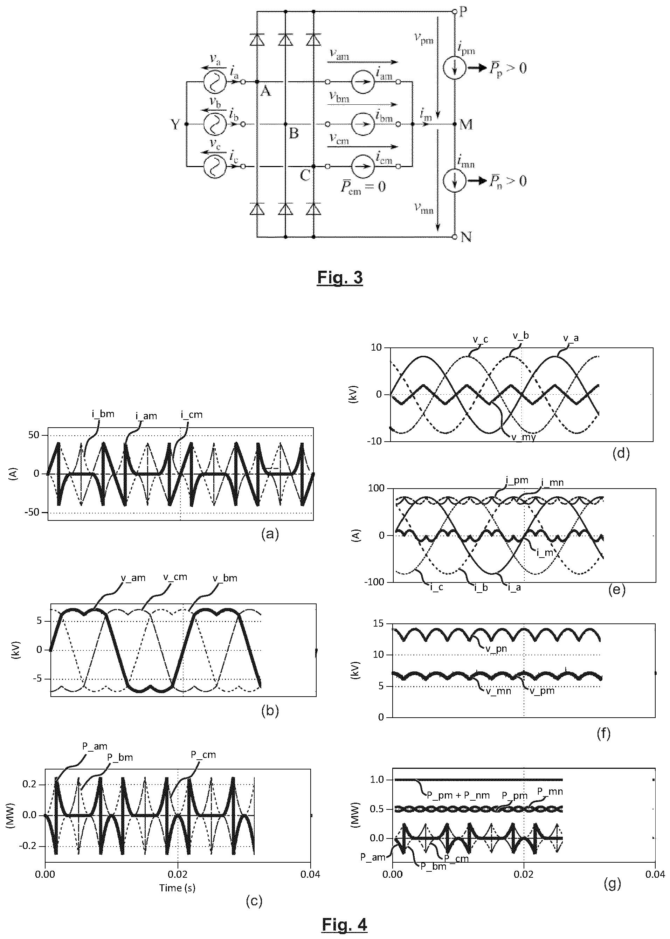

Fig. 3 shows an idealized equivalent circuit of the configuration of Fig. 1 when operated in the control mode as described herein, i.e. as depicted in Fig. 2. Figs. 4(a) through 4(g) show corresponding simulated waveforms of the various voltages, currents, and powers. As can be seen from Figs. 4(a) through 4(g), there is always one branch BR1...BR3 in which the corresponding full-bridge circuit(s) operate(s) with zero current. That is, all transistors can be turned off, suppressing switching losses. Midpoint current im is non-zero but has a comparatively low magnitude. The power processed by the output branches, i.e. Ppm, Pmn, fluctuates but again with a comparatively low magnitude.

The converter 100 as described herein has a simple configuration as compared to conventional topologies, and the full-bridge converter configuration deals only with about 10% of the converter power and needs to block only half of the DC link voltage, possibly resulting in a more compact realization. The switching losses in the full-bridge circuits may be reduced, and the voltage stress of active semiconductors may be reduced, which may help to simplify their construction and insulation requirements (e.g., auxiliary power, signalling, reliability monitoring).

It is noted that throughout this specification, symbols with subscript indices (e.g., $v_{max}$), symbols with underline-separated indices (e.g., v_max) and symbols in which the indices are not separated from the main quantity (e.g., vmax) may be used interchangeably but, in each case, designate the same.

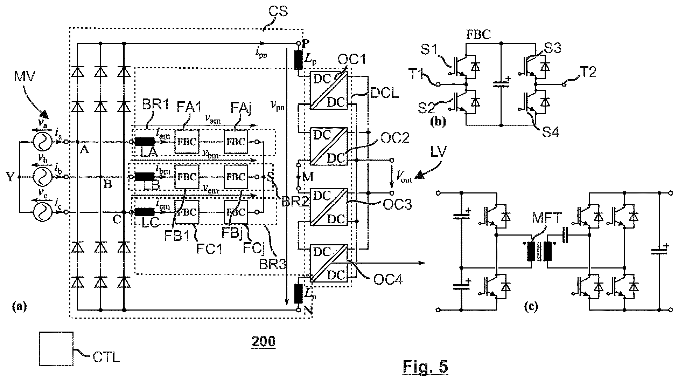

Also part of this disclosure is a series of enumerated clauses that refer to a circuit diagram illustrated in Fig. 5.

Clause 1:
A converter (200) for transferring power from a medium voltage side to a low voltage side, the converter comprising:

an AC/DC converter stage (CS) configured to be connected to a three-phase medium-voltage AC power source (va, vb, vc) at the medium voltage side, the AC/DC converter stage having three AC input terminals (A, B, C) for the respective AC phases of the medium-voltage AC power source (va, vb, vc), and having a positive voltage output (P) and a negative voltage output (N);

a DC link (DCL) comprising at least one first DC/DC converter (OC1, OC2) and at least one second DC/DC converter (OC3, OC4),

wherein input sides of the at least one first and second DC/DC converters (OC1... OC4) are connected in series between the positive output (P) and the negative output (N) of the AC/DC converter stage (CS), with a midpoint (M) between the at least one first DC/DC converter (OC1, OC2) and the at least one second DC/DC converter (OC3, OC4);

three switchable branches (BR1, BR2, BR3), each of the switchable branches comprising, in a series connection between a respective one of the three AC input terminals (A, B, C) and a common star point (S), an inductor (LA, LB, LC) and at least one full-bridge circuit (FA1...FAj; FB1...FBj; FC1...FCj), wherein the star point (S) is connected to the midpoint (M) of the DC link only via the switchable branches and the first and second DC/DC converters; and

a controller (CTL) configured to control the first and second DC/DC converters (OC1...OC4) and the full-bridge circuits (FA1...FAj; FB1...FBj; FC1...FCj) such that a current ($i_{pm}$) between the positive voltage output (P) and the midpoint (M) essentially equals

$$i_{pn} = P^*/(v_{max} - v_{min})$$

where P* is a predetermined power reference, $v_{max}$ is the phase voltage applied to the switchable branch that, at the point in time of performing the control, has the highest phase voltage among the three AC phases, and $v_{min}$ is the phase voltage applied to the switchable branch (BR1, BR2, BR3) that, at the point in time of performing the control, has the lowest phase voltage among the three AC phases, and such that the remaining switchable branch is operated in a shoot-through mode to apply essentially zero volts at the star point (S).

Clause 2: The converter of clause 1, wherein at least one of the full-bridge circuits comprises two or more full bridge circuits connected in series.
Clause 4: The converter according to any one of the preceding clauses, wherein the at least one first DC/DC converter comprises a plurality of first DC/DC converter circuits connected with their input sides in series between the positive medium voltage output P and the DC link midpoint M; and the at least one second DC/DC converter comprises a plurality of second DC/DC converter circuits connected with their cell input sides in series between the negative medium voltage output N and the DC link midpoint M.
Clause 5: The converter according to clause 4, wherein each of the first and second DC/DC converter circuits comprises, respectively, the input side having a DC/AC converter circuit and an output side having an AC/DC converter circuit, wherein the input side and output side are galvanically isolated from each other, optionally galvanically insulated by an AC/AC transformer (MFT) such as a Medium Frequency Transformer, for transferring power from the cell input side to the cell output side or vice-versa.
Clause 6: The converter according to clause 5, wherein the first and second DC/DC converter circuits have, at their output side, a diode-based passive AC/DC converter circuit.
Clause 7: The converter according to any one of the preceding clauses, wherein output sides of the at least one first and the at least one second DC/DC converter circuits are connected in parallel to form the low voltage side.
Clause 8: The converter according to any one of the preceding clauses, wherein the AC/DC converter stage comprises a diode bridge, in particular a B6 diode bridge.
Clause 9: The converter according to any one of the preceding clauses, wherein the at least one first and second DC/DC converter circuits operate at medium frequency.
Clause 10: A method of transferring power from a medium voltage side to a low voltage side, or vice-versa, by a converter (200), the converter comprising an AC/DC converter stage (CS) connected to a three-phase medium-voltage AC power source at the medium voltage side, the AC/DC converter stage having three AC input terminals (A, B, C) for the respective AC phases of the medium-voltage AC power source, and having a positive voltage output (P) and a negative voltage output (N), a DC link (DCL) comprising at least one first DC/DC converter (OC1, OC2) and at least one second DC/DC converter (OC3, OC4) each having input sides connected in series between the positive output (P) and the negative output (N) of the AC/DC converter stage (CS), with a midpoint (M) between the at least one first DC/DC converter (OC1, OC2) and the at least one second DC/DC converter (OC3, OC4), and three switchable branches (BR1, BR2, BR3), each of the switchable branches (BR1, BR2, BR3) comprising, in a series connection between a respective one of the three AC input terminals (A, B, C) and a common star point (S), an inductor (LA, LB, LC) and at least one full-bridge circuit (FA1...FAj; FB1...FBj; FC1...FCj), wherein the star point (S) is connected to the midpoint (M) of the DC link only via the switchable branches and the first and second DC/DC converters, wherein the method comprises: providing a three-phase medium AC voltage to the respective input terminals (A, B, C) of the converter (200); converting the medium AC voltage to DC voltage by the AC/DC converter stage (CS) of the converter (200) and providing the DC voltage between the positive medium voltage output (P) and the negative medium voltage output (N); and controlling the first and second DC/DC converters (OC1 ... OC4) and the bi-directional switch circuits such that a current ($i_{pm}$) between the positive voltage output (P) and the midpoint (M) essentially equals

$$i_{pn} = P^*/(v_{max} - v_{min})$$

where P* is a predetermined power reference, $v_{max}$ is the phase voltage applied to the switchable branch (BR1, BR2, BR3) that, at the point in time of performing the control, has the highest phase voltage among the three AC phases, and $v_{min}$ is the phase voltage applied to the switchable branch that, at the point in time of performing the control, has the lowest phase voltage among the three AC phases, and such that the remaining switchable branch is operated in a shoot-through mode to apply essentially zero volts at the star point (S).

In a converter 200 according to any one of clause 1 through 10 and as shown in Fig. 5(a), the star point S is not directly connected to the midpoint M. While the output branches control ipn such that together with vpn=vmax-vmin, a constant power flow results, the full-bridge circuits (shown in Fig. 5(b)) are controlled to compensate the harmonics of the B6 bridge and ensure sinusoidal currents. The full-bridge circuits do not process average power. The phase currents of the phases with the maximum and minimum voltage are not directly defined by the output branches. Instead, to ensure constant output power, $i_{pn} = \dfrac{P*}{vmax - vmin}$. The current references for the full-bridge circuits connected to the phases with the maximum and the minimum voltages, respectively, are obtained as imaxm*=G*vmax-ipn and iminm*=G*vmin+ipn. The current reference of the full-bridge circuit connected to the middle phase, imidm*, follows from Kirchoffs's current law.

The full-bridge circuit(s) connected to the middle phase is/are operated in a shoot-through mode, i.e. applying zero volts, without any high-frequency switching of its transistors. Hence, switching losses are reduced.

Thus, the voltage between M and S becomes $v_{ms}^* = \dfrac{1}{2}$ $(v_{max} + v_{min})$ - $v_{mid}$. The full-bridge circuits process zero average and relatively low peak power and show low power fluctuations. The output branches process essentially constant power.

An exemplary circuit diagram of a DC/DC converter used in the converter 200 of Fig. 5(a) is shown in Fig. 5(c).

Although particular embodiments have been shown and described, it will be understood that it is not intended to limit the claimed inventions to the preferred embodiments, and it will be obvious to those skilled in the art that various changes and modifications may be made without department from the spirit and scope of the claimed inventions. The specification and drawings are, accordingly, to be regarded in an illustrative rather than restrictive sense. The claimed inventions are intended to cover alternatives, modifications, and equivalents.

**Claims**

1. A converter (100) for transferring power from a medium voltage side (MV) to a low voltage side (LV) or vice-versa, the converter comprising:

an AC/DC converter stage (CS) configured to be connected to a three-phase medium-voltage AC power source (va, vb, vc) at the medium voltage side, the AC/DC converter stage (CS) having three AC input terminals (A, B, C) for the respective AC phases of the medium-voltage AC power source (va, vb, vc), and having a positive voltage output (P) and a negative voltage output (N);
a DC link (DCL) comprising at least one first DC/DC converter (OC1, OC2) and at least one second DC/DC converter (OC3, OC4), wherein input sides of the at least one first and second DC/DC converters (OC1, OC2, OC3, OC4) are connected in series between the positive output (P) and the negative output (N) of the AC/DC converter stage (CS), with a midpoint (M) between the at least one first DC/DC converter (OC1, OC2) and the at least one second DC/DC converter (OC3, OC4);
three switchable branches (BR1, BR2, BR3), each of the switchable branches (BR1, BR2, BR3) comprising, in a series connection between a respective one of the three AC input terminals (A, B, C) and a common star point (S), an inductor (LA, LB, LC) and at least one full-bridge circuit (FA1...FAj; FB1...FBj; FC1...FCj), wherein the star point (S) is directly connected to the midpoint (M) of the DC link (DCL); and
a controller (CTL) configured to control the first and second DC/DC converters (OC1, OC2, OC3, OC4) and the full-bridge circuits (FA1...FAj; FB1...FBj; FC1...FCj) such that, when the switchable branch (BR1, BR2, BR3) that, at the point in time of performing the control, has the highest phase voltage among the three AC phases is referred to as the high branch, the switchable branch (FA1...FAj; FB1...FBj; FC1...FCj) that, at the point in time of performing the control, has the lowest phase voltage among the three AC phases is referred to as the low branch and the remaining switchable branch (FA1...FAj; FB1...FBj; FC1...FCj) is referred to as the mid branch, the at least one full-bridge circuit (FB1...FBj) of the mid branch (BR2) and the at least one full-bridge circuit (FA1...FAj; FC1...FCj) of either the high branch (BR1) or the low branch (BR3) are operated to impress a desired mid-branch current (i_midm) and the at least one full-bridge circuit (FA1...FAj; FC1...FCj) in the other one of the high branch (BR1) and the low branch (BR3) is turned off.

2. The converter according to claim 1, wherein at least one of the full-bridge circuits comprises two or more full bridge circuits connected in series.

3. The converter according to any one of the preceding claims, wherein

   the at least one first DC/DC converter (OC1, OC2) comprises a plurality of first DC/DC converter circuits connected with their input sides in series between the positive medium voltage output (P) and the DC link midpoint (M); and
   the at least one second DC/DC converter (OC3, OC4) comprises a plurality of second DC/DC converter circuits connected with their cell input sides in series between the negative medium voltage output (N) and the DC link midpoint (M).

4. The converter according to claim 3, wherein each of the first and second DC/DC converter circuits comprises, respectively, the input side having a DC/AC converter circuit and an output side having an AC/DC converter circuit, wherein the input side and output side are galvanically isolated from each other, optionally galvanically isolated by an AC/AC transformer (MFT) such as a Medium Frequency Transformer, for transferring power from the cell input side to the cell output side or vice-versa.

5. The converter according to claim 4, wherein the first and second DC/DC converter circuits have, at their output side, a diode-based passive AC/DC converter circuit.

6. The converter according to any one of the preceding claims, wherein output sides of the at least one first and the at least one second DC/DC converter circuits are connected in parallel to form the low voltage side.

7. The converter according to any one of the preceding claims, wherein the AC/DC converter stage (CS) comprises a diode bridge, in particular a B6 diode bridge.

8. The converter according to any one of the preceding claims, wherein the at least one first and second DC/DC converter circuits (OC1... OC4) operate at medium frequency.

9. A method of transferring power from a medium voltage side (MV) to a low voltage side (LV), or vice-versa, by a converter (100), the converter comprising an AC/DC converter stage (CS) connected to a three-phase medium-voltage AC power source (va, vb, vc) at the medium voltage side, the AC/DC converter stage (CS) having three AC input terminals (A, B, C) for the respective AC phases of the medium-voltage AC power source (va, vb, vc), and having a positive voltage output (P) and a negative voltage output (N), a DC link (DCL) comprising at least one first DC/DC converter (OC1, OC2) and at least one second DC/DC converter (OC3, OC4) each having input sides connected in series between the positive output (P) and the negative output (N) of the AC/DC converter stage (CS), with a midpoint (M) between the at least one first DC/DC converter (OC1, OC2) and the at least one second DC/DC converter (OC3, OC4), and three switchable branches (BR1, BR2, BR3), each of the switchable branches (BR1, BR2, BR3) comprising, in a series connection between a respective one of the three AC input terminals (A, B, C) and a common star point (S), an inductor (LA, LB, LC) and at least one full-bridge circuit (FA1...FAj; FB1...FBj; FC1...FCj), wherein the star point (S) is directly connected to the midpoint (M) of the DC link (DCL), wherein the method comprises:

   - providing a three-phase medium AC voltage to the respective input terminals (A, B, C) of the converter;
   - converting the medium AC voltage to DC voltage by the AC/DC converter stage (CS) of the converter and providing the DC voltage between the positive medium voltage output (P) and the negative medium voltage output (N); and
   - controlling the first and second DC/DC converters (OC1...OC4) and the bi-directional switch circuits (FA1...FAj; FB1...FBj; FC1...FCj) such that, when the switchable branch (BR1, BR2, BR3) that, at the point in time of performing the control, has the highest phase voltage among the three AC phases is referred to as the high branch, the switchable branch (FA1...FAj; FB1...FBj; FC1...FCj) that, at the point in time of performing the control, has the lowest phase voltage among the three AC phases is referred to as the low branch and the remaining switchable branch (FA1...FAj; FB1...FBj; FC1...FCj) is referred to as the mid branch, the at least one full-bridge circuit (FB1...FBj) of the mid branch (BR2) and the at least one full-bridge circuit (FA1...FAj; FC1...FCj) of either the high branch (BR1) or the low branch (BR3) are operated to impress a desired mid-branch current (i_midm) and the at least one full-bridge circuit (FA1...FAj; FC1...FCj) in the other one of the high branch (BR1) and the low branch (BR3) is turned off.

10. Use of the converter according to any one of claims 1 to 8 to perform the method according to claim 9.

**Fig. 1**

**Fig. 2**

Fig. 3

Fig. 4

Fig. 5

Europäisches
Patentamt

European
Patent Office

Office européen
des brevets

# EUROPEAN SEARCH REPORT

**Application Number**

EP 23 18 6470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ADAM G P ET AL: "Controlled transition bridge converter: Operating principle, control and application in HVDC transmission systems", ELECTRIC POWER SYSTEMS RESEARCH, ELSEVIER, AMSTERDAM, NL, vol. 163, 14 June 2018 (2018-06-14), pages 98-109, XP085437421, ISSN: 0378-7796, DOI: 10.1016/J.EPSR.2018.06.001 * page 98 - page 100 * ----- | 1-10 | INV. H02M1/00 H02M1/15 H02M1/42 H02M3/335 H02M7/483 H02M7/487 H02M7/217 H02M7/5395 |
| A | FARGHLY ABDELRAHMAN ET AL: "Input-Series Output-Parallel connected Solid-State Transformer employed at Shipboard Applications", 2023 IEEE CONFERENCE ON POWER ELECTRONICS AND RENEWABLE ENERGY (CPERE), IEEE, 19 February 2023 (2023-02-19), pages 1-7, XP034340969, DOI: 10.1109/CPERE56564.2023.10119593 [retrieved on 2023-05-12] * page 1 - page 3 * ----- | 1-10 | |
| A | UI-MIN CHOI ET AL: "Simple Neutral-Point Voltage Control for Three-Level Inverters Using a Discontinuous Pulse Width Modulation", IEEE TRANSACTIONS ON ENERGY CONVERSION, IEEE SERVICE CENTER, PISCATAWAY, NJ, US, vol. 28, no. 2, June 2013 (2013-06), pages 434-443, XP011510219, ISSN: 0885-8969, DOI: 10.1109/TEC.2013.2257786 * page 434 - page 435 * ----- -/-- | 1-10 | **TECHNICAL FIELDS SEARCHED (IPC)** H02M |

The present search report has been drawn up for all claims

| Place of search | Date of completion of the search | Examiner |
|---|---|---|
| The Hague | 18 December 2023 | Lochhead, Steven |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                                                                                                                                                                                       & : member of the same patent family, corresponding
    document

EPO FORM 1503 03.82 (P04C01)

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HAI-HONG HUANG ET AL: "Modified DPWM Method for Vienna Rectifier Considering Current Harmonic Distortions Reduction and Neutral Point Potential Balance", IEEJ TRANSACTIONS ON ELECTRICAL AND ELECTRONIC ENGINEERING, JOHN WILEY & SONS, INC, US, vol. 15, no. 8, 5 July 2020 (2020-07-05), pages 1205-1212, XP072433351, ISSN: 1931-4973, DOI: 10.1002/TEE.23183 * page 1205 – page 1208 * ----- | 1-10 | |

TECHNICAL FIELDS
SEARCHED (IPC)

The present search report has been drawn up for all claims

| Place of search | Date of completion of the search | Examiner |
|---|---|---|
| The Hague | 18 December 2023 | Lochhead, Steven |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021115966 A1